# EUROPÄISCHE PATENTSCHRIFT

(11) **EP 3 014 116 B1**
(45) Veröffentlichungstag und Bekanntmachung des Hinweises auf die Patenterteilung: **06.03.2019**
(21) Anmeldenummer: 14730528.8
(22) Anmeldetag: 16.06.2014
(51) Int. Cl.: F03D 13/00, F03D 9/00, H01C 7/12, H01C 1/08

(54) **WINDENERGIEANLAGE**
WIND TURBINE
ÉOLIENNE

(30) Priorität: 24.06.2013 DE 102013211898
(43) Veröffentlichungstag der Anmeldung: 04.05.2016
(73) Patentinhaber: Wobben Properties GmbH, 26607 Aurich (DE)
(72) Erfinder: BERENTS, Gerd, 26605 Aurich (DE); SCHROBSDORFF, Simon, 26556 Eversmeer (DE)
(74) Vertreter: Eisenführ Speiser
(86) Internationale Anmeldenummer: PCT/EP2014/062531
(87) Internationale Veröffentlichungsnummer: WO 2014/206783

(56) Entgegenhaltungen:
- EP-A1- 1 499 009
- WO-A1-2010/070403
- US-A- 4 335 417
- US-A- 4 851 955
- US-A- 4 962 440
- US-A- 5 757 604

## Beschreibung

Die vorliegende Erfindung betrifft eine Windenergieanlage.
Windenergieanlagen weisen einen aerodynamischen Rotor typischerweise mit drei Rotorblättern auf, welche den Rotor in eine Drehbewegung versetzen, soweit Wind vorhanden ist. Der Rotor ist direkt oder indirekt mit einem elektrischen Generator gekoppelt, der eine elektrische Leistung erzeugt, wenn der Rotor den elektrischen Generator in Bewegung versetzt. Bei bestimmten Betriebszuständen der Windenergieanlage kann es dazu kommen, dass Spannungsspitzen an dem Generatorausgang auftreten. Um die Auswirkung dieser Spannungsspitzen zu reduzieren, kann die überschüssige elektrische Energie in Wärme umgewandelt werden. Dies kann beispielsweise durch Lastwiderstände erfolgen.
In der prioritätsbegründenden deutschen Patentanmeldung hat das Deutsche Patent- und Markenamt die folgenden Dokumente recherchiert: DE 10 2008 049 630 A1; DE 10 2009 004 318 A1 und US 2012/0025804 A1.

Weiterhin offenbart WO 2010/070403 A1 eine Windenergieanlage nach dem Stand der Technik.

Es ist daher eine Aufgabe der vorliegenden Erfindung, eine Windenergieanlage vorzusehen, welche dazu in der Lage ist, von dem elektrischen Generator erzeugte überschüssige elektrische Leistung effizient in Wärme umzuwandeln.
Diese Aufgabe wird durch eine Windenergieanlage nach Anspruch 1 gelöst.
Somit wird eine Windenergieanlage mit einem Rotor mit mindestens zwei Rotorblättern, einem elektrischen Generator, der direkt oder indirekt mit dem Rotor gekoppelt ist und eine elektrische Leistung erzeugt, und mindestens eine Leistungselektronikeinheit vorgesehen, welche zum Wandeln einer Eingangsspannung mit einer Eingangsfrequenz in eine Ausgangsspannung mit einer Ausgangsfrequenz vorgesehen ist. Die Leistungselektronikeinheit weist mindestens eine Varistoreinheit auf. Die Varistoreinheit weist mindestens eine Varistorscheibe mit einem spannungsabhängigen Widerstand und mindestens eine Metallscheibe auf, welche in Kontakt mit der mindestens einen Varistorscheibe und als Kühlelement zum Kühlen der Varistorscheibe vorgesehen ist. Die Varistoreinheit kann über einen spannungsabhängigen Widerstand verfügen. Die Metallscheiben weisen eine gute Wärmeleitfähigkeit auf, so dass sie gut zur Kühlung der Varistorscheiben verwendet werden können.

Gemäß einem Aspekt der vorliegenden Erfindung weist die mindestens eine Varistoreinheit ein Gehäuse auf und das Gehäuse ist mit einer Vergussmasse ausgegossen, um die Wärmekapazität der Varistoreinheit zu erhöhen.

Gemäß einem weiteren Aspekt der Erfindung ist sind mehrere Varistoreinheiten über ein Verspannungselement thermisch gekoppelt.

Gemäß einem weiteren Aspekt der vorliegenden Erfindung werden drei Varistoreinheiten elektrisch im Dreieck zusammen geschaltet, so dass sie eine Dreiphasenvaristoreinheit ausbilden.

Gemäß einem weiteren Aspekt der vorliegenden Erfindung werden die Anschlussleitungen für die Varistoreinheit auf einer Seite der Varistoreinheit nach außen geführt.

Die Erfindung betrifft einen Gedanken, dass bei bestimmten Betriebszuständen der Windenergieanlage, z. B. bei einem Lastabwurf, Spannungsspitzen am Generator auftreten können, welche zur Beschädigung der Überspannungsableiter am Generator sowie anderer Bauteile führen können. Zur Reduzierung derartiger Spannungsspitzen am Generator wird erfindungsgemäß mindestens eine Varistoreinheit vorgesehen. Die Varistoreinheit kann z. B. in einem Gondelsteuerschrank vorgesehen sein.

Weitere Ausgestaltungen der Erfindung sind Gegenstand der Unteransprüche.

Vorteile und Ausführungsbeispiele der Erfindung werden nachstehend unter Bezugnahme auf die Zeichnung näher erläutert.
- Fig. 1: zeigt eine schematische Darstellung einer Windenergieanlage gemäß der Erfindung,
- Fig. 2A: zeigt eine schematische Darstellung einer Varistoreinheit gemäß einem ersten Ausführungsbeispiel,
- Fig. 2B: zeigt eine weitere schematische Darstellung der Varistoreinheit gemäß dem ersten Ausführungsbeispiel, und
- Fig. 2C: zeigt eine Draufsicht auf eine Varistoreinheit gemäß dem ersten Ausführungsbeispiel.

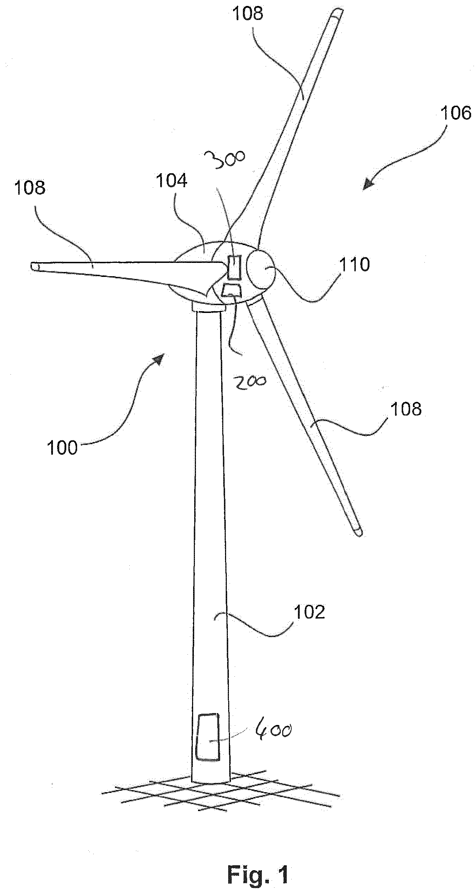

Fig. 1 zeigt eine schematische Darstellung einer Windenergieanlage gemäß der Erfindung. Die Windenergieanlage 100 weist einen Turm 102 und eine Gondel 104 auf. An der Gondel 104 ist ein Rotor 106 mit drei Rotorblättern 108 und einem Spinner 110 vorgesehen. Der Rotor 106 wird im Betrieb durch den Wind in eine Drehbewegung versetzt und dreht somit auch (direkt oder indirekt) einen Rotor oder Läufer eines elektrischen Generators 200 in der Gondel 104. Der Pitchwinkel der Rotorblätter 108 kann durch Pitchmotoren an den Rotorblattwurzeln der jeweiligen Rotorblätter 108 verändert werden.

In der Gondel 104 ist ein elektrischer Generator 200 vorgesehen. In der Gondel 104 kann eine erste Leistungselektronikeinheit 300 und im Fußbereich des Turms 102 kann eine zweite Leistungselektronikeinheit 400 vorgesehen sein. Die erste Leistungselektronikeinheit 300 kann z. B. ein Gleichrichter sein. Alternativ dazu kann die erste Leistungselektronikeinheit aber auch ein Gondelsteuerschrank oder eine Filtereinheit darstellen.

Die zweite Leistungselektronikeinheit 400 kann z. B. einen Wechselrichter darstellen.

Die erste und/oder zweite Leistungselektronikeinheit 300, 400 kann mindestens eine Varistoreinheit gemäß der Erfindung aufweisen.

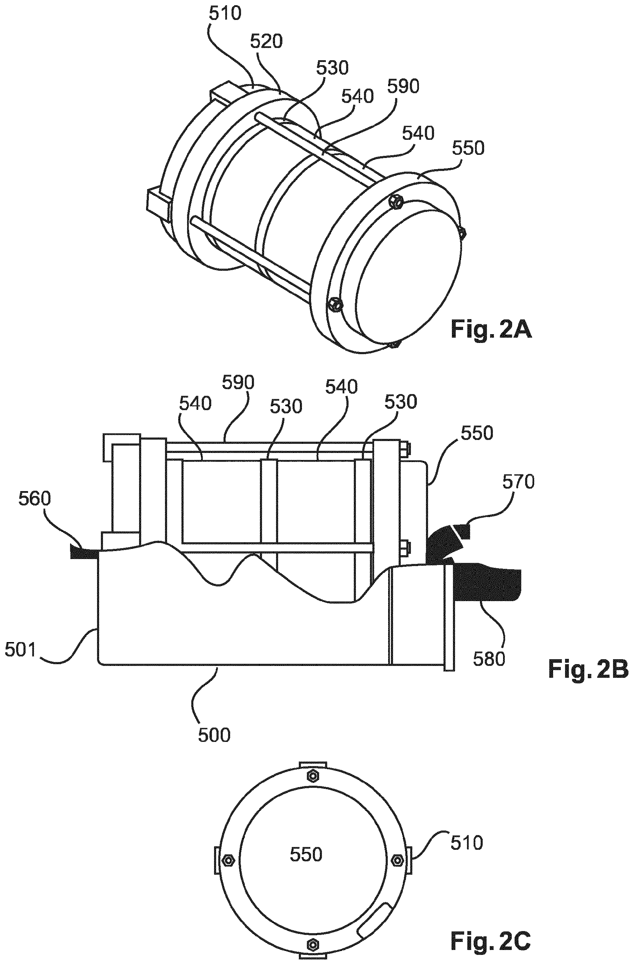

Fig. 2A zeigt eine schematische Darstellung einer Varistoreinheit gemäß einem ersten Ausführungsbeispiel. Die Varistoreinheit 500 gemäß dem ersten Ausführungsbeispiel kann in der ersten und/oder zweiten Leistungselektronikeinheit 300, 400 vorgesehen sein und kann dazu dienen, elektrische Leistung in Wärme umzuwandeln.

Die Varistoreinheit 500 weist an ihrer ersten Seite einen Isolator 510, eine erste Metallscheibe 520, eine erste Varistorscheibe 530, eine zweite Metallscheibe 540, eine zweite Varistorscheibe 530, eine dritte Metallscheibe 540 und eine vierte Metallscheibe 550 auf. Die vierte Metallscheibe 550 kann auch als ein Deckel fungieren. Gemäß dem ersten Ausführungsbeispiel sind somit die Varistorscheiben 530 immer in Kontakt mit mindestens einer Metallscheibe, vorzugsweise mit zwei Metallscheiben, und können über einen spannungsabhängigen Widerstand verfügen. Die zweite und dritte Metallscheibe 540 weisen eine Dicke auf, welche größer als die Dicke der Varistorscheiben ist. Die zweite und dritte Metallscheibe 540 sind vorzugsweise aus einem Metall hergestellt, welches über eine gute Wärmeleitfähigkeit verfügt. Vorzugsweise ist das Volumen der zweiten und dritten Metallscheiben 540 wesentlich größer als das Volumen der Varistorscheiben 530. Die erste, zweite, dritte und vierte Metallscheibe sowie die Varistorscheiben 530 können z. B. mittels Stangen 590 aneinander befestigt werden, wobei die Stangen 590 an der ersten und vierten Metallscheibe 520, 550 verschraubt sind, wobei die Varistorscheiben 530 sowie die zweite und dritte Metallscheibe 540 dazwischen gestapelt angeordnet sind.

Fig. 2B zeigt eine weitere schematische Darstellung der Varistoreinheit gemäß dem zweiten Ausführungsbeispiel. Zusätzlich zu der Darstellung von Fig. 2A ist auch ein Gehäuse 501 zumindest teilweise dargestellt. Dieses Gehäuse 501 kann beispielsweise zylinderförmig ausgestaltet sein. Die Varistoreinheit wird innerhalb des Gehäuses platziert und das Gehäuse 501 kann dann mittels einer Vergussmasse ausgegossen werden, was ebenfalls vorteilhaft hinsichtlich einer erhöhten Wärmekapazität ist.

In Fig. 2B sind ebenfalls die Anschlussleitungen 570 sowie die optionalen Anschlussklemmen 580 zu sehen.

Fig. 2C zeigt eine Draufsicht auf eine Varistoreinheit gemäß dem ersten Ausführungsbeispiel. Hierbei ist insbesondere die vierte Metallscheibe 550 zu sehen.

Durch die Verwendung der Varistoreinheit gemäß dem ersten Ausführungsbeispiel in der ersten Leistungselektronikeinheit 300, welche z. B. mit den Anschlussklemmen des Generators 200 verbunden ist, können hoch-energetischen Überspannungen an den Generatorausgangsklemmen begrenzt werden. Insbesondere die kompakte Bauform der Varistoreinheit ist vorteilhaft, weil sie sich somit in bereits bestehende Leistungsschränke bzw. Leistungselektronikeinheiten einbauen lassen kann.

Der Anschluss der oben beschriebenen Varistoreinheit kann direkt an das Drahtstromnetz erfolgen.

Durch die Kopplung der Varistorscheiben 530 mit Metallscheiben 540 kann eine thermische Kopplung erreicht werden, so dass die durch die Varistorscheiben 530 erzeugte Wärme auf die Metallscheiben 540 übertragen werden kann. Somit wird die Wärmekapazität der jeweiligen Varistoreinheiten 500 erheblich vergrößert, so dass auch eine verbesserte Wärmeabfuhr vorhanden ist.

Durch die Verwendung der erfindungsgemäßen Varistoreinheiten kann die Windenergieanlage sehr schnell beispielsweise auf einen Lastabwurf reagieren. Unmittelbar nach einem Lastabwurf kann die nach wie vor erzeugte elektrische Leistung des Generators über die Varistoreinheiten in Wärme umgewandelt werden. Durch den Einsatz der erfindungsgemäßen Varistoreinheiten kann derjenige Zeitabschnitt (bzw. die in diesem Zeitabschnitt erzeugte elektrische Leistung) abgedeckt werden, bis zu welcher der Pitchwinkel der Rotorblätter geändert und die durch den elektrischen Generator erzeugte Leistung reduziert werden kann. In dieser Zeitspanne, bis zu der die durch den Generator erzeugte elektrische Leistung reduziert werden kann, können die erfindungsgemäßen Varistoreinheiten verwendet werden, um die erzeugte Leistung zumindest kurzfristig in Wärme umzuwandeln.

Erfindungsgemäß werden die Metallscheiben, welche mit den Varistorscheiben in Kontakt stehen, mit einem großen Volumen ausgeführt, so dass diese Metallscheiben über eine große Wärmekapazität verfügen, so dass die in den Varistorscheiben erzeugte Wärme schnell auf die Metallscheiben übertragen werden kann. Durch die große Wärmekapazität der erfindungsgemäßen Varistoreinheiten können die Varistoreinheiten auch schneller wieder aktiviert werden, da die Varistorscheiben schneller abkühlen.

Die Varistorscheiben verfügen über einen spannungsabhängigen Widerstand.

## Patentansprüche

1. Windenergieanlage, mit
einem Rotor (110) mit mindestens zwei Rotorblättern (108),
einem elektrischen Generator (200), der direkt oder indirekt mit dem Rotor (110) gekoppelt ist und elektrische Leistung erzeugt, und
mindestens einer Leistungselektronikeinheit (300, 400) zum Wandeln einer Eingangsspannung mit einer Eingangsfrequenz in eine Ausgangsspannung mit einer Ausgangsfrequenz,
wobei die Leistungselektronikeinheit (300, 400) mindestens eine Varistoreinheit (500) aufweist,
wobei die Varistoreinheit (500) aufweist:
mindestens eine Varistorscheibe (530) mit einem spannungsabhängigen Widerstand, und
mindestens eine erste Metallscheibe (540) in direktem Kontakt mit einer Seite der mindestens einen Varistorscheibe (530) und eine zweite Metallscheibe (540) im direkten Kontakt mit einer anderen Seite der Varistorscheibe als Kühlelement zum Kühlen der Varistorscheibe (530),
wobei die Dicke der mindestens einen Metallscheibe (540) größer ist als die Dicke der Varistorscheibe (530),
wobei das Volumen der mindestens einen Metallscheibe (540) größer ist als das Volumen der mindestens einen Varistorscheibe (530).

2. Windenergieanlage nach Anspruch 1, wobei
die Varistoreinheit (500) ein Gehäuse (501) aufweist, welche die mindestens eine Varistorscheibe (530) und die mindestens eine Metallscheibe (540) umgibt,
wobei das Gehäuse (510) mittels einer Vergussmasse zur Erhöhung der Wärmekapazität ausgegossen ist.

3. Windenergieanlage nach einem der Ansprüche 1 bis 2, wobei drei Varistoreinheiten (500) elektrisch im Dreieck zusammen geschaltet sind, um eine 3-Phasen-Varistoreinheit auszubilden.

## Claims

1. Wind turbine, comprising
a rotor (110) comprising at least two rotor blades (108),
an electric generator (200), which is coupled directly or indirectly to the rotor (110) and generates electric power, and
at least one power electronics unit (300, 400) for converting an input voltage with an input frequency into an output voltage with an output frequency,
wherein the power electronics unit (300, 400) has at least one varistor unit (500), wherein the varistor unit (500) has:
at least one varistor disc (530) having a voltage-dependent resistance, and
at least one first metal disc (540) in direct contact with the one side of at least one varistor disc (530) and a second metal disc (540) in direct contact with another side of the varistor disc as cooling element for cooling the varistor disc (530),
wherein the thickness of the at least one metal disc (540) is greater than the thickness of the varistor disc (530),
wherein the volume of the at least one metal disc (540) is greater than the volume of the at least one varistor disc (530).

2. Wind turbine according to Claim 1, wherein
the varistor unit (500) has a housing (501) which surrounds the at least one varistor disc (530) and the at least one metal disc (540),
wherein the housing (510) is filled by means of a potting compound so as to increase the thermal capacity.

3. Wind turbine according to one of Claims 1 to 2, wherein three varistor units (500) are delta-connected electrically to one another so as to form a three-phase varistor unit.

## Revendications

1. Eolienne, avec
un rotor (110) avec au moins deux pales de rotor (108),
un générateur (200) électrique, qui est couplé directement ou indirectement au rotor (110) et génère une puissance électrique, et
au moins une unité électronique de puissance (300, 400) servant à transformer une tension d'entrée avec une fréquence d'entrée en une tension de sortie avec une fréquence de sortie,
dans laquelle l'unité électronique de puissance (300, 400) présente au moins une unité de varistance (500),
dans laquelle l'unité de varistance (500) présente :
au moins un disque de varistance (530) avec une résistance dépendant de la tension, et
au moins un premier disque métallique (540) en contact direct avec un côté de l'au moins un disque de varistance (530) et un second disque métallique (540) en contact direct avec un autre côté du disque de varistance en tant qu'élément de refroidissement servant à refroidir le disque de varistance (530),
dans laquelle l'épaisseur de l'au moins un disque métallique (540) est plus grande que l'épaisseur du disque de varistance (530),
dans laquelle le volume de l'au moins un disque métallique (540) est plus grand que le volume de l'au moins un disque de varistance (530).

2. Eolienne selon la revendication 1, dans laquelle
l'unité de varistance (500) présente un boîtier (501), qui entoure l'au moins un disque de varistance (530) et l'au moins un disque métallique (540),
dans laquelle le boîtier (510) est jointoyé au moyen d'une masse de scellement servant à augmenter la capacité thermique.

3. Eolienne selon l'une quelconque des revendications 1 et 2, dans laquelle trois unités de varistance (500) sont branchées ensemble électriquement en triangle pour réaliser une unité de varistance à 3 phases.
